Europäisches Patentamt

European Patent Office

Office européen des brevets

(19)

(11) Publication number: **0 186 873 B1**

# EUROPEAN PATENT SPECIFICATION

(12)

(45) Date of publication of patent specification: 25.09.91 (51) Int. Cl.⁵: **H02H 9/04**, H04M 3/18

(21) Application number: 85116302.2

(22) Date of filing: 20.12.85

(54) Protector circuit.

(30) Priority: 24.12.84 JP 272555/84
06.12.85 JP 274727/85

(43) Date of publication of application:
09.07.86 Bulletin 86/28

(45) Publication of the grant of the patent:
25.09.91 Bulletin 91/39

(84) Designated Contracting States:
DE FR SE

(56) References cited:
FR-A- 1 566 130
FR-A- 2 433 845
FR-A- 2 498 387
US-A- 4 322 767

ELECTRONIQUE APPLICATIONS, no. 36,
April-May 1984, pages 61-63, Evry, FR; M.
RAULT "Circuits de protection pour mon-
tages à triacs"

(73) Proprietor: NIPPON TELEGRAPH AND TELE-
PHONE CORPORATION
1-6 Uchisaiwaicho 1-chome Chiyoda-ku
Tokyo(JP)

(72) Inventor: Satoh, Hidetaka
2-2416-1, Hanazono
Tokorozawa-shi Saitama(JP)
Inventor: Kurosawa, Hideyuki
3-2-19, Kinugaoka
Hachioji-shi Tokyo(JP)
Inventor: Kamijoh, Yoshiaki
4107, Uenohara Uenohara-machi
Kitatsuru-gun Yamanashi(JP)
Inventor: Jyumonji, Hiromichi
4-105, 2-1-30, Fujimidai
Kunitachi-shi Tokyo(JP)

(74) Representative: Blumbach Weser Bergen
Kramer Zwirner Hoffmann Patentanwälte
Radeckestrasse 43
W-8000 München 60(DE)

EP 0 186 873 B1

**Description**

## BACKGROUND OF THE INVENTION

This invention relates to protector circuits for protecting communication equipments for analog or digital transmission systems from lightning surges applied to signal lines.

Protector circuit standards for digital transmission systems with a transmission speed of 200 kb/sec. are as follows.

* Limit voltage (i.e., breakdown voltage of communication equipment) $V_R$ is no higher than 320 V.
* Battery feed voltage (i.e., voltage supplied from a telephone exchange to a subscriber's communication equipment) $V_{Bf}$ is 30 V (between core line and ground).
* Non-operation voltage (i.e., the sum of the 50/60 Hz induced voltage on commercial power line, crosstalk of telephone bell ringer voltage and battery feed voltage, at which non-operation voltage the protector circuit should not be operated) $V_A$ is 100 V. In a protector circuit in an analog transmission system, the non-operation voltage is the ringer voltage of 120 V. And the protector circuit is designed such that it will not be operated at this ringer voltage of 120 V.
* Electrostatic capacitance C is no higher than 250 pF. (Transmission loss standards specify that the signal line impedance with respect to ground should be 4 kΩ or above for the maximum frequency component of the transmitted signal.)
* Surge current withstanding capability (i.e., current caused through protection circuit by application of a lightning surge waveform [10/1,000] μsec rising to a peak voltage in 10 μsec. and exponentially falling to one half the peak voltage in 1,000 μsec) $I_p$ is greater than 58A.

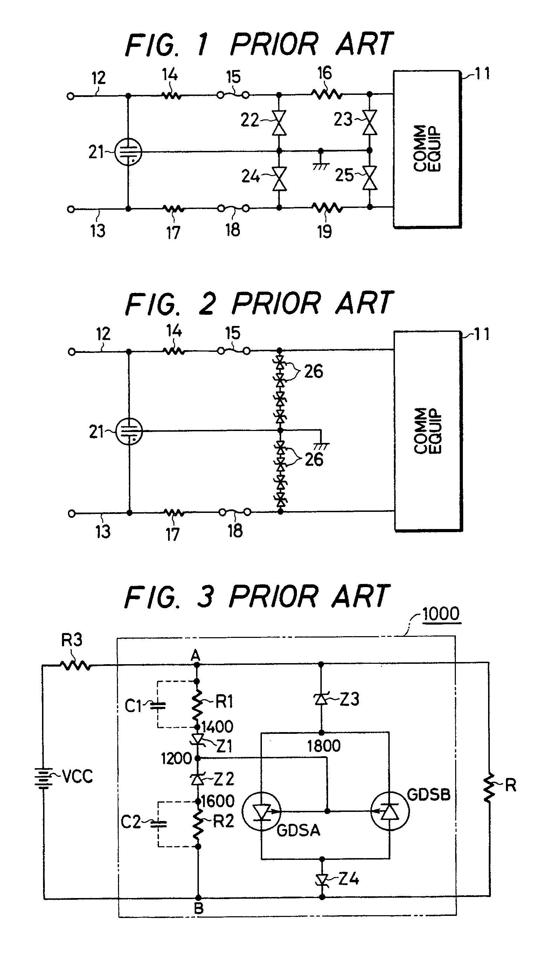

Fig. 1 shows a prior art protector circuit for switchboard analog circuits. The circuit comprises a series connection of resistor 14, fuse 15 and resistor 16 and another series connection of resistor 17, fuse 18 and resistor 19, these series connections being inserted in pair signal lines (i.e., subscriber's line) 12 and 13 connected to subscriber's communication equipment 11. Resistors 14 and 17 are grounded at the ends thereof opposite from switchboard 11 through a three-electrode gas-filled protector (discharge tube) 21. Resistors 16 and 19 are grounded at the both ends thereof through zinc oxide varistors 22 to 25.

When a lightning surge voltage is applied to signal line 12, discharge is caused in the three-electrode gas-filled protector 21 between signal line 12 and ground. Due to the resultant discharge light or ions, the other side of the discharge tube 21 between signal line 13 and ground is triggered to discharge. The voltage on signal lines 12 and 13 consequently becomes the arc voltage of discharge tube 21, which is 20 to 50 V, thus protecting equipment 11 from the lightning surge voltage.

The discharge trigger voltage and discharge delay time of the discharge tube, however, vary greatly, i.e., 300 to 800 V and 0.3 to 3.0 μsec., depending on the input surge voltage rising time. In addition, the response time of the three-electrode gas-filled protector is large. Before the discharge of discharge tube 21 is initiated, the lightning surge voltage appears across varistors 22 to 25, so that communication equipment 11 is protected by the "on"-state voltage across varistors 22 to 25 until the sum of the "on"-state voltage across varistors 22 and 24 and voltage drop across resistors 14 and 17 is sufficiently increased to start discharge of three electrode gas-filled protector 21.

In the protector circuit shown in Fig. 1, it is necessary to make up for fluctuations of the discharge characteristics of three-electrode gas-filled protector 21. Also, it is necessary to solve problems due to the delay of discharge. To ensure necessary surge protection characteristics, varistors, resistors, etc. are used. The circuit, therefore, comprises a large number of components and inevitably has a large size. In addition, the varistors should withstand high surge voltage, leading to an extra electrostatic capacitance.

Fig. 2 shows another prior art protector circuit which is designed for digital transmission systems. This circuit uses, in lieu of varistors, series connections of a plurality of bilateral voltage limiting elements 26, e.g., bilateral zener diodes (avalanche diodes) are used. In order to reduce capacitance, the series connection of bilateral voltage limiting elements 26 is fabricated as a lamination. The lamination has a large number of layers and requires a complicated manufacturing process.

Meanwhile, a varistor has a low voltage non-linearity index. Therefore, even if a multi-stage surge protection circuit is employed (e.g., three-stage in the case of Fig. 1), the communication equipment 11 should be designed to have a high breakdown voltage to cover variation in limiting voltage of the varistor.

While the protector circuits shown in Figs. 1 and 2 are actually used, there has been proposed a protector circuit, which does not use any lightning tube but uses thyristors, as shown in Fig. 3. This circuit is disclosed in U. S. patent No. 4,322,767 (filed on February 11, 1980) entitled "Bidirectional Solid-State Protector Circuitry Using Gated Diode Switches". In this protector circuit, upon application of a positive lightning surge voltage to point A, the voltage at point 1200 is clamped by zener diode: Z2 to a fixed

2

voltage. At this time, zener diode Z3 is turned on so that the lightning surge voltage is applied to point 1800. The voltage at point 1800 thus exceeds the voltage at point 1200 to cause current to the gate of unidirectional thyristor GDSA, thus turning on the thyristor GDSA. When the applied lightning surge voltage is reduced, zener diode Z3 is turned off to turn off thyristor GDSA. Zener diodes Z1 and Z4 and thyristor GDSB are provided for negative lightning surge voltages.

This protector circuit has a voltage detector, the output of which is fed to the gate of the thyristor to turn on the thyristor. The voltage detector includes a large number of components and has a complicated construction. In addition, zener diodes Z3 and Z4 can not be constructed as a single element. Fig. 3 shows only a portion of the circuit that is connected to signal line 12 shown in Fig. 1, that is, it is necessary to connect the same circuit to signal line 13. Further, zener diodes Z3 and Z4 are necessary for controlling the thyristor gate, and their breakdown voltage can not be determined in relation to the battery feed voltage on the signal line.

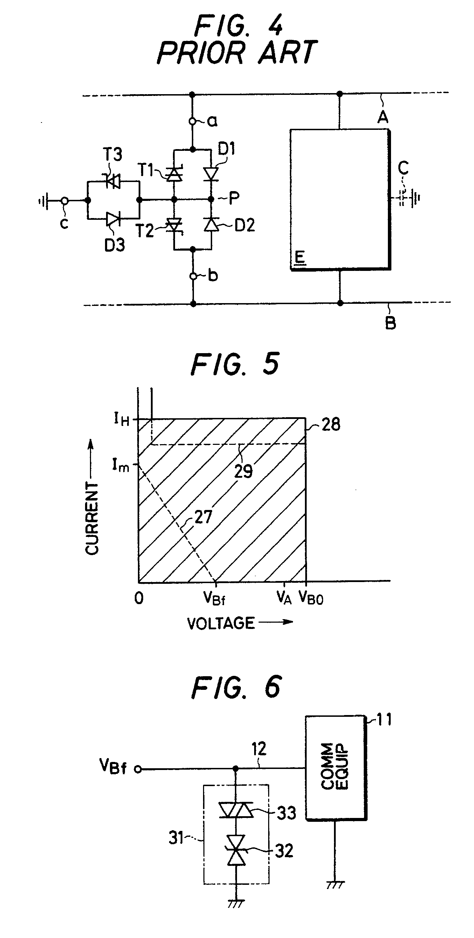

Fig. 4 shows another prior art protector circuit disclosed in U. S. patent No. 4,282,555 (filed on August 13, 1979) entitled "Overvoltage Protection Means for Protecting Low Power Semiconductor Components". When the voltage on signal line A exceeds the sum of forward "on" voltage of diode D1 and break-over voltage $V_{B0}$ of unidirectional thyristor T3 as a result of application of a positive lightning surge voltage, diode D1 and thyristor T3 are turned on. When the lightning surge voltage is reduced so that the surge current becomes lower than holding current $I_H$ of unidirectional thyristor T3, thyristor T3 is turned off. When a negative lightning surge voltage is applied to signal line A, diode D3 and thyristor T1 are turned on.

Where the current versus voltage characteristic of power supplied to the communication equipment via signal lines is as shown by line 27 in Fig. 5, holding current $I_H$ of thyristors T1 and T3 should be above maximum current $I_m$. In order to attain a large holding current $I_H$, conventional surge protector circuit employs thyristors of an emitter short-circuited structure, resulting in increased chip areas therefor. In addition, break-over voltage $V_{B0}$ of thyristor is set to be higher than non-operation voltage $V_A$ lest the thyristor should turn on at non-operation voltage $V_A$. Therefore, the current versus voltage characteristic of the thyristor has been set as shown by curve 28. The thyristor thus momentarily consumes a high power of $V_{B0} \times I_H$ (shown shaded in the Figure) when it is turned on. To increase the surge withstanding capability, therefore, the thyristor has been designed to have a large chip area. In this manner, the conventional surge protector circuit must use thyristors of increased chip areas, thus increasing capacitance to deteriorate the signal transmission characteristics of the signal lines. This method , therefore, is not suited for high speed transmission systems. Further, heating of the thyristor due to lightning surge current therein reduces its holding current as shown by dashed line 29. Until the thyristor temperature is lowered to cause the holding current to exceed the supply current, the thyristor is held in ON-state, while the supply current flows therethrough, disabling the communication equipment. That is, communication remains interrupted until the holding current becomes higher than the supply current as a thyristor temperature falls again. For example, when the holding current of the thyristor which is 150 mA at normal temperature is reduced to 0 due to a rise of the thyristor peak temperature to 250 to 300°C caused by a lightning surge, the thyristor temperature should become lower than 100°C to regain a holding current in excess of the supply current of 120 mA. This takes a time period of at least 10 msec. During this period of at least 10 msec., the communication is held interrupted. To obtain quick thyristor temperature fall, it is necessary to use a double heatsink diode structure of silver, a good heat conductor, leading to a high price.

In the protector circuits shown in Figs. 3 and 4, an independently operable protector circuit is connected to each signal line. Therefore, when a lightning surge is applied with phase differences to a plurality of signal lines leading from a communication equipment or when there are fluctuations of the timing of start of operation of the protection circuits connected to the individual signal lines, a large transverse mode voltage is liable to be produced between signal lines through the communication equipment connected therebetween. Such a transverse mode voltage will cause rupture of the communication equipment.

French patent No. 2,498,387 discloses a protector circuit according to the first portion of claim 1 and 2, respectively. In this circuit, a voltage detector is used to detect a surge voltage, and the detector output is used to simultaneously control the gates of bidirectional thyristors connected between the pair signal lines and ground, respectively, to simultaneously turn on the two thyristors. The transverse mode voltage noted above, therefore, is not generated in this case. However, the voltage detector for detecting the surge voltage is complicated. In addition, a delay is involved in the surge detection. Therefore, a grounded bidirectional voltage limiting element is connected between each signal line and ground to provide protection against surges until the thyristor is turned on.

SUMMARY OF THE INVENTION

Therefore, an object of the invention is to provide a protector circuit having a short response time.

Another object of the invention is to provide a protector circuit, which has less components and has a simpler construction so that it can be constructed in a small size, while also being applicable to high speed transmission systems.

Another object of the invention is to provide a protector circuit, which has less components and a simpler construction and can prevent generation of a transverse mode voltage across an equipment having a plurality of signal lines. These objects are achieved with a protector circuit as claimed.

According to one feature of the invention, a series connection of a bidirectional voltage limiting element and a two-terminal bidirectional thyristor, is inserted between each signal line connected to a communication equipment and ground. Breakdown voltage $V_B$ of the bidirectional voltage limiting element is set to be slightly higher than battery feed voltage $V_{Bf}$ on signal line. Sum $(V_B + V_{B0})$ of breakdown voltage $V_B$ noted above and break-over voltage $V_{B0}$ of bidirectional thyristor is set to be lower than breakdown voltage $V_R$ of the equipment and higher than non-operation voltage $V_A$, that is, $V_R > (V_B + V_{B0}) > V_A$. When a lightning surge voltage is applied to a signal line so that the voltage thereon exceeds $(V_B + V_{B0})$, the bidirectional voltage limiting element and bidirectional thyristor are both turned on to protect the equipment from the lightning surge. When the lightning surge voltage becomes lower than $V_B$, the bidirectional voltage limiting element and bidirectional thyristor are both turned off due to $V_B > V_{Bf}$. Since both the elements are turned off by the operation of the bidirectional voltage limiting element, the holding current of the bidirectional thyristor may be low, and it is possible to extremely reduce power consumed by the bidirectional thyristor and reduce size thereof.

The gate terminals of the individual bidirectional thyristors are connected together and held open without being connected to any other part. When the bidirectional voltage limiting element and bidirectional thyristor in one of the series connections in this structure are turned on with a lightning surge, the gate-cathode voltage on this thyristor is applied as a control signal to the gate terminals of the other bidirectional thyristors that are connected to the gate terminal noted above, so that these thyristors are also turned on. Thus, there is no possibility of generation of a transverse mode voltage.

According to another feature of the invention, a circuit consisting of a first bidirectional voltage limiting element, a three-terminal bidirectional thyristor connected in series with the first bidirectional voltage limiting element and a second bidirectional voltage limiting element connected between the gate and anode terminals of the bidirectional thyristor, is connected between each signal line of communication equipment and ground. Breakdown voltage $V_{B1}$ of the first bidirectional voltage limiting element is set to be slightly higher than battery feed voltage $V_{Bf}$ on signal line. Also, sum $(V_{B1} + V_{B2} + V_{GK})$ of that breakdown voltage $V_{B1}$, breakdown voltage $V_{B2}$ of the second bidirectional voltage limiting element and gate-cathode voltage $V_{GK}$ of the bidirectional thyristor, is set to be lower than breakdown voltage $V_R$ of the equipment and higher than non-operation voltage $V_A$. Further, breakdown voltage $V_{B2}$ is set lower than break-over voltage $V_{B0}$ of the bidirectional thyristor. With this structure, when the voltage on the signal line exceeds $(V_{B1} + V_{B2} + V_{GK})$ due to application of a lightning surge voltage to the signal line, both the first and second bidirectional voltage limiting elements are turned on to cause current to flow to the gate terminal of the bidirectional thyristor and turn it on, so that the equipment is protected from the lightning surge. When the lightning surge voltage becomes lower than $V_{B1}$, the first bidirectional voltage limiting element and bidirectional thyristor are turned off. Again in this case, the bidirectional thyristor may be such one that consumes low power.

The gates of the individual bidirectional thyristors are connected together. With this arrangement, the generation of a transverse mode voltage can be prevented.

In the above individual features of the invention, in case where a commercial power line is connected to the communication equipment, application of a lightning surge voltage to the equipment may be prevented by connecting a three-terminal bidirectional thyristor between the commercial power line and ground and connecting the gate terminal of this thyristor to the gate terminals of the bidirectional thyristors connected between the signal lines and ground. In this way, it is possible to prevent a transverse mode voltage form being generated between the commercial power line and signal lines.

## BRIEF DESCRIPTION OF THE DRAWINGS

Fig. 1 is a circuit diagram showing a prior art protector circuit used for an analog transmission system;

Fig. 2 is a circuit diagram showing a prior art protector circuit used for a digital transmission system;

Fig. 3 is a circuit diagram showing a prior art protector circuit using zener diodes and thyristors;

Fig. 4 is a circuit diagram showing a prior art protector circuit using thyristors operated with a high holding current;

Fig. 5 is a graph showing a current versus voltage characteristic of the circuit shown in Fig. 4;

Fig. 6 is a circuit diagram showing protector circuit where thyristors are turned on through break-over;

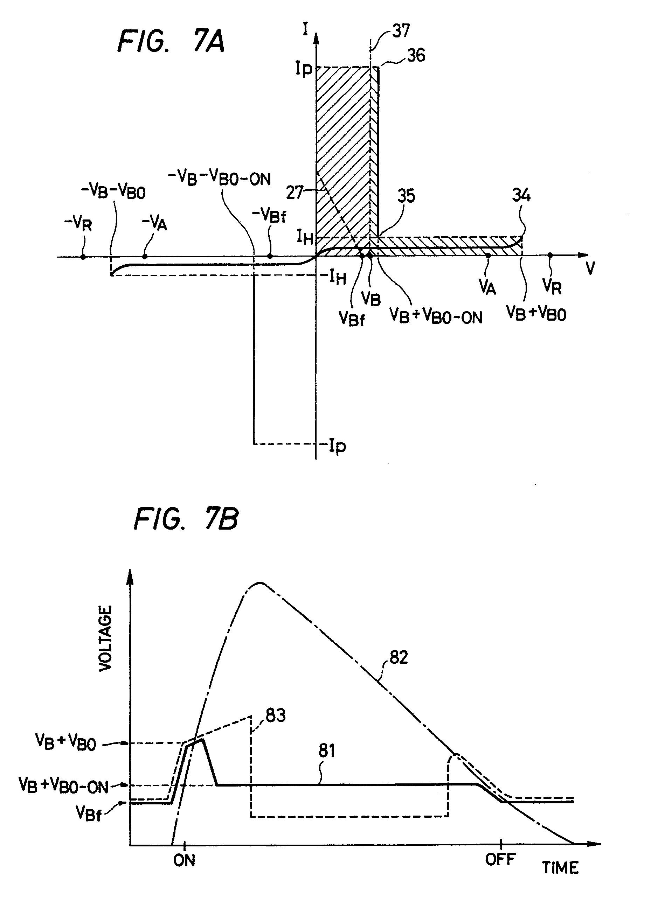

Fig. 7A is a graph showing a current versus voltage characteristic of the circuit shown in Fig. 6;

Fig. 7B is a graph showing a response characteristic of the circuit shown in Fig. 6;

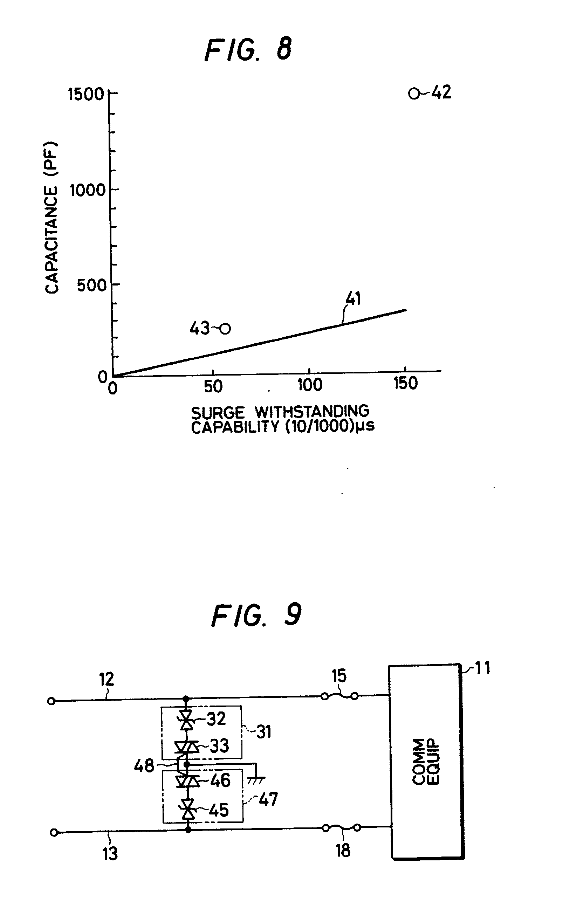

Fig. 8 is a graph showing a capacitance versus surge withstanding capability relation of protector circuit;

Fig. 9 is a circuit diagram showing as an embodiment of the invention the application of the circuit of Fig. 6 to an equipment having two signal lines;

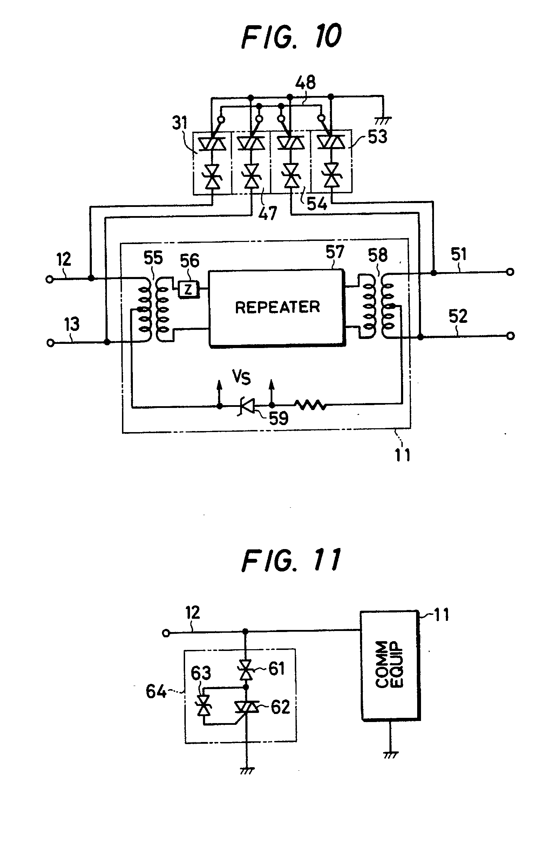

Fig. 10 is a circuit diagram showing as an embodiment of the invention the application of the circuit of Fig. 6 to an equipment having four signal lines;

Fig. 11 is a circuit diagram showing a protector circuit where thyristors are turned on through gate control for blocking voltage;

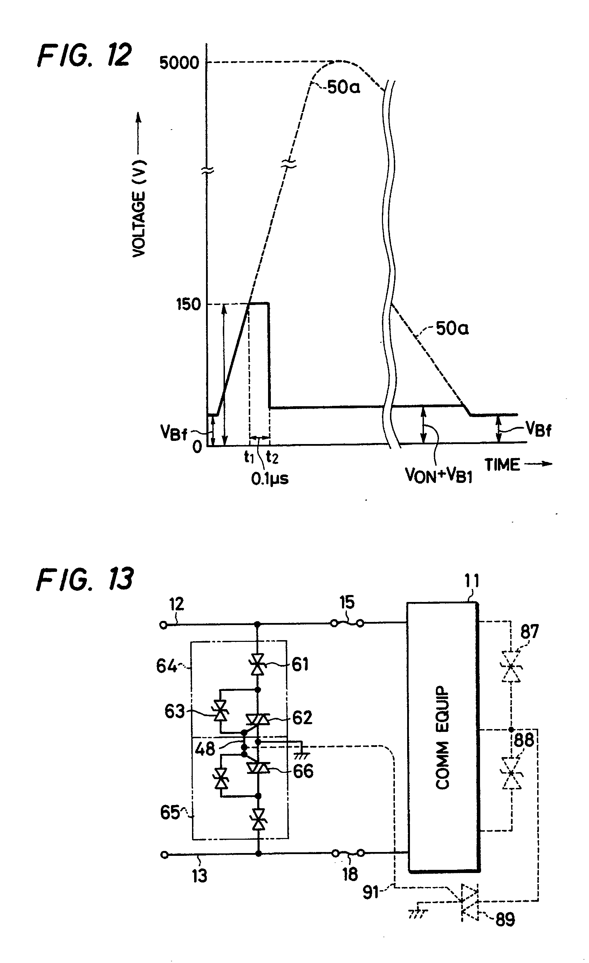

Fig. 12 is a graph showing a lightning surge input response characteristic of the protector circuit shown in Fig. 11;

Fig. 13 is a circuit diagram showing as an embodiment of the invention the application of the circuit of Fig. 11 to an equipment having two signal lines; and

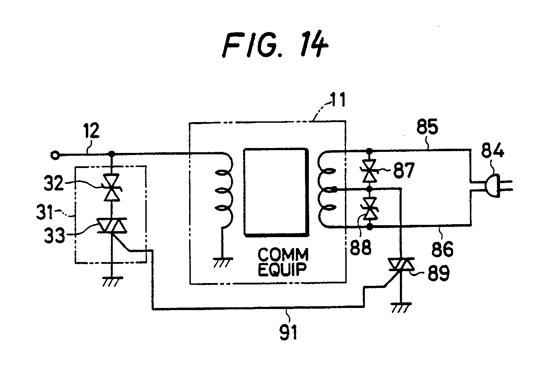

Fig. 14 is a circuit diagram showing a further protector circuit applied to an equipment having a signal line and a power line.

## DESCRIPTION OF THE PREFERRED EMBODIMENTS

Fig. 6 shows an embodiment of protector circuit according to the invention. Protector circuit 31 according to the invention is connected between signal line 12 leading form equipment 11, i.e., a communication equipment, and ground. Protector circuit 31 comprises bidirectional voltage limiting element 32 and two-terminal bidirectional thyristor 33 in series therewith. Bidirectional voltage limiting element 32 may be a bidirectional zener diode (avalanche diode), a varistor, etc. Bidirectional thyristor 33 may be a SSS (silicon symmetrical switch) element without any gate terminal. Or it may be a triac with an open gate terminal (i.e., with the gate terminal connected to nowhere). Bidirectional voltage limiting element 32 has breakdown voltage $V_B$ slightly higher than battery feed voltage $V_{Bf}$ on signal line 12. Sum $(V_{B0} + V_B)$ of break-over voltage $V_{B0}$ of bidirectional thyristor 33 and breakdown voltage $V_B$ noted above is set to be lower than breakdown voltage $V_R$ of equipment 11 but is higher than non-operation voltage $V_A$.

It is now assumed that $V_B$ and $V_{B0}$ are 35 V and 85 V, respectively. The voltage on signal line 12 is increased upon application of a lightning surge to the line. When the voltage reaches the sum of break-over voltage $V_{B0}$ of bidirectional thyristor 33, i.e., 85 V, and breakdown voltage $V_B$ of bidirectional voltage limiting element 32, i.e., 35 V, the sum being 120 V as shown by point 34 in Fig. 7A, bidirectional voltage limiting element 32 is turned on through breakdown, and bidirectional thyristor 33 is turned on through break-over. Once bidirectional voltage limiting element 32 is turned on, it is held at the fixed breakdown voltage $V_B$. However, operating voltage across the bidirectional thyristor 33 becomes $V_{B0\text{-}ON}$ (1 to 3 V), a forward operating voltage of diode. The voltage between signal line 12 and ground, therefore, is reduced to the sum of these voltages, as shown at point 36, which is 36 to 39 V. Thus, it is possible to extremely reduce adverse effects of overvoltage on equipment 11. In addition, the voltage at point 35 will never become lower than battery feed voltage $V_{Bf}$. Thus, there is no possibility that overload protection function of a power supply system performs malfunction. Lightning surge current $I_p$ is caused under this small voltage drop condition. Since the lightning surge current is 58 A in the average, when a lightning surge is approximated by a 1-msec. pulse, energy loss E in protector circuit 31 is given as

$$E = \int_0^t V_{B0-ON} \cdot I_p dt + \int_0^t V_B \cdot I_p dt$$

$$= 3 \ (V) \times 58 \ (A) \times 10^{-3} (sec.) + 35 \ (V)$$

$$\times 58 \ (A) \times 10^{-3} \ (sec.)$$

$$= 0.174 \ (J) + 2.03 \ (J)$$

$$= 2.2 \ (J)$$

Particularly, energy loss in bidirectional thyristor 33 is only 0.174 J. Therefore, bidirectional thyristor 33 may have as small chip area as about 4 mm, and also its capacitance $C_T$ may be made as low as 50 pF.

With breakdown voltage $V_B$ of bidirectional voltage limiting element 32 set to 35 V, which is slightly higher than supply voltage $V_{Bf}$ of 30 V, the surge current can be reduced. In effect, when the voltage is reduced from point 36 to point 35, the continual current due to supplied power will vanish, thus turning off both bidirectional voltage limiting element 32 and bidirectional thyristor 33. Thus, a surge response characteristic as shown by plot 81 in Fig. 7B can be obtained. In the Figure, plot 82 shows the input surge, and plot 83 shows the response characteristic of the circuit shown in Fig. 1.

Referring to Fig. 7A, the shaded area on the right side of line 37 for $V = V_{Bf}$ represents power consumed by bidirectional thyristor 33, while the shaded on the left side of line 37 represents power consumed by bidirectional voltage limiting element 32. Holding current $I_H$ of bidirectional thyristor 33 thus can be reduced to reduce power consumption and hence size thereof. Further, bidirectional voltage limiting element 32 may have as small chip area as 5.6 mm, and also its capacitance $C_Z$ may made as low as 280 pF. Capacitance C of the entire protector circuit, which is the series capacitance constituted by capacitances $C_Z$ and $C_T$ of bidirectional voltage limiting element 32 and bidirectional thyristor 33, may be as small as

$$C = \frac{C_T \cdot C_Z}{C_T + C_Z} = \frac{50 \times 280}{50 + 280} = 43 \text{ pF}$$

The protector circuit thus can be employed for high-speed, wide bandwidth communication purposes. With the protector circuit according to the invention the capacitance with respect to surge withstanding capability (10/1000) $\mu$s is as shown by plot 41 in Fig. 8, whereas with the prior art protector circuit shown in Fig. 1 it is so high as shown at point 43, roughly double the value according to the invention.

Further, according to the invention, unlike the case where a surge voltage is detected and the detection output is used to turn on thyristors, only two components are necessary in the structure of Fig. 6. In other words, according to the invention fewer components are needed compared to the prior art structure, that is, the construction is simpler and can be fabricated more inexpensively. Further, the circuit may be designed to comply with various different standards by suitably selecting breakdown voltage $V_B$ and break-over voltage $V_{B0}$, that is, it has great freedom of design and permits approximation of ideal characteristics.

Further, unlike the case where a surge voltage is detected by a surge voltage detector and the output thereof is used to turn on thyristors, according to the invention the lightning surge voltage is applied directly to the thyristor. Thus, it is possible to quickly respond to the lightning surge voltage application and hold operating voltage fluctuations within about 10 V, permitting operating voltage ($V_B + V_{B0}$) to be 120 to 150 V inclusive of the manufacturing fluctuations. In the protector circuit shown in Fig. 1, the operating voltage fluctuates greatly from 120 to 195 V. With the protector circuit according to the invention with less fluctuations as noted above, it is possible to reduce the breakdown voltage of the LSI of equipment 11 (e.g., subscriber's circuit) from 320 V to 270 V and reduce the chip area of the LSI by about 20 %.

Further, zinc oxide varistors may be used for bidirectional voltage limiting element 32 to provide the protector circuit inexpensively. A zinc oxide varistor has a low voltage non-linearity index. The limit voltage, therefore, has dependency on the high input lightning surge voltage. Assuming the breakdown voltage $V_B$ of the zinc oxide varistor to be 120 V, the limit voltage is increased to 195 V by application of a lightning surge with a peak of 15 kV. According to the invention, however, the bidirectional thyristor undergoes break-over to reduce voltage from $V_{B0} + V_B$ to $V_{B0-ON} + V_B$, i.e., reduce by $V_{B0} - V_{B0-ON}$. Therefore, even if the breakdown voltage is increased to $V_B + \delta$ with an increase of the lightning surge current, the limit voltage is substantially independent of the input surge voltage because $\delta$ is lower than $V_{B0} - V_{B0-ON}$.

Further, according to this protector circuit, the continual current is cut by the bidirectional voltage limiting element. Therefore, the normal state, e.g., communication state, can be quickly restored after the lightning surge application, that is, the communication interruption period can be reduced. Furthermore, unlike the multi-stage protection circuit shown in Fig. 1, no resistor is connected in series with the signal line. It is thus possible to reduce transmission loss and increase transmission distance.

Where signal lines 12 and 13 connected to equipment 11 are return trip lines, series connection 47 of bidirectional voltage limiting element 45 and bidirectional thyristor 46 may be connected between signal line 13 and ground just like series connection 31 of bidirectional voltage limiting element 32 and bidirectional thyristor 33 is connected between signal line 12 and ground, as shown in Fig. 9. In this case, in order to prevent equipment 11 from rupture of operation which would be caused by application of a lightning surge through equipment 11 due to phase difference in the lightning surge on signal lines 12 and 13, the gate

6

terminals of bidirectional thyristors 33 and 46 may be connected together by line 48. Line 48 is connected to no other part, that is, the gate terminals are held open. When bidirectional voltage limiting element 32 and bidirectional thyristor 33 are turned on by application of a lightning surge voltage to signal line 12, a voltage is generated between the gate and cathode terminals of bidirectional thyristor 33 due to current therein. This voltage is fed through line 48 to the gate terminal of the other bidirectional thyristor 46 to turn on this bidirectional thyristor 46. Thus, application of a lagging phase lightning surge voltage to signal line 13 will not result in the generation of any transverse mode voltage between signal lines 12 and 13, so that equipment 11 can be protected.

In the example of Fig. 9, fuses 15 and 18 are inserted in series in respective signal lines 12 and 13. With this arrangement, when a 200-V commercial power supply voltage appears between signal lines 12 and 13, the components of series connections 31 and 47 are turned on, and short-circuit of the components is caused by the resultant current therein so that equipment 11 is protected. But even if open-circuit of series connections 31 and 47 is caused, equipment 11 is protected by the disconnection of fuses 15 and 18.

Where equipment 11 is connected to input signal lines 12 and 13 and output signal lines 51 and 52 like a submarine repeater, series connections 31, 47, 53 and 54 each consisting of a bidirectional voltage limiting element and a bidirectional thyristor are each connected between each of signal lines 12, 13, 51 and 52 and ground as shown in Fig. 10. Further, to prevent generation of a transverse mode voltage between signal lines 12, 13, 51 and 52, gate terminals of the bidirectional thyristors in series connections 31, 47, 53 and 54 are connected to line 48, which is connected to no other part to hold the gate terminals open. Input signal lines 12 and 13 are connected to the input side of LSI repeater 57 through transformer 55 and impedance matching element 56. The output side of repeater 57 is connected to output signal lines 51 and 52 through transformer 58. Zener diode 59 is connected between a primary side center tap of transformer 55 and a secondary side center tap of transformer 58. The terminal voltage across zener diode 59 is applied as power source voltage to repeator 57.

In the above example of Fig. 10, each bidirectional thyristor is turned on through break-over by a lightning surge voltage. Alternatively, the gate terminal of the bidirectional thyristo may be controlled to turn on the thyristor. Fig. 11 shows such an example. In this example, a series connection of bidirectional voltage limiting element 61 and three-terminal bidirectional thyristor 62 is connected between signal line 12 and ground, and bidirectional voltage limiting element 63 is connected between the gate and anode terminals of bidirectional thyristor 62. Bidirectional voltage limiting elements 61 and 63 and bidirectional thyristor 62 constitute protector circuit 64. Sum ($V_{B1} + V_{B2} + V_{GK}$) of breakdown voltages $V_{B1}$ and $V_{B2}$ of bidirectional voltage limiting elements 61 and 63 and gate-cathode voltage $V_{GK}$ of bidirectional thyristor 62 is set to be lower than breakdown voltage $V_R$ of equipment 11 and higher than non-operation voltage $V_A$. Breakdown voltage $V_{B1}$ is set to be slightly higher than battery feed voltage $V_{Bf}$ on signal line 12. Breakdown voltage $V_{B2}$ is set to be lower than break-over voltage $V_{B0}$ of bidirectional thyristor 62. Bidirectional voltage limiting elements 61 and 63 may be zener diodes, varistors, etc.

When a lightning surge voltage is applied to signal line 12, voltage limiting elements 61 and 63 are simultaneously turned on through breakdown. The current thus caused is fed to the gate terminal of bidirectional thyristor 62 to turn on the thyristor, whereby equipment 11 is protected against the lightning surge. When the lightning surge voltage is reduced to become lower than breakdown voltage $V_{B1}$, bidirectional voltage limiting element 61 is turned off to turn off bidirectional thyristor 62.

Now, the manner in which the lightning surge voltage applied to equipment 11 with time will be described with reference to Fig. 12, where it is assumed that bidirectional avalanche diodes are used for bidirectional voltage limiting elements 61 and 63 of protector circuit 64. In the absence of protector circuit 64 connected to signal line 12, the lightning surge voltage which is applied to equipment 11 becomes high as shown by dashed plot 50a to cause dielectric breakdown of equipment 11. With protector circuit 64 connected to signal line 12, as soon as the input lightning surge voltage reaches 150 V which is sum of breakdown voltages $V_{B1}$ and $V_{B2}$ of bidirectional avalanche diodes 61 and 63 and gate-cathode diffusion potential $V_{GK}$ of bidirectional thyristor 62, current is caused through these elements at this instant $t_1$. The voltage on signal line 12 thus is held at the constant voltage of 150 V, so that equipment is protected from the lightning surge. This current constitutes the gate current to the bidirectional thyristor 62, and the thristor 62 is turned on at instant $t_2$ approximately 0.9 sec. after instant $t_1$. With bidirectional thyristor 62 turned on, bidirectional avalanche diode 63 is turned off. That is, the "on" period of bidirectional avalanche diode 63 is as short as approximately 0.1 sec. With bidirectional thyristor 62 turned on, the voltage of protector circuit 64 is held at the sum of "on" voltage $V_{ON}$ of bidirectional thyristor 61 (which is 1 to 3 V) and breakdown voltage $V_{B1}$ of bidirectional avalanche diode 61. It will thus be seen that continual current may be cut by setting the sum voltage, i.e., $V_{ON} + V_{B1}$, to be slightly higher than battery feed voltage $V_{Bf}$. In addition, in this case since the potential is varied only slightly even after the lightning surge application, the communication state can be quickly restored.

Now, energy loss in protector circuit 64 will be considered. Let it be assumed that a current of 50 A peak (i.e., lightning surge peak voltage of 5,000 V divided by signal line surge impedance of 100 $\Omega$) with a lightning surge waveform of 10/1,000 $\mu$sec. flows on the circuit. The "on" period of bidirectional avalanche diode 63 is as short as about 0.1 sec., and energy loss caused in this element is about 0.1 mJ. The "on" voltage $V_{ON}$ of bidirectional thyristor 62 is 1 to 3 V, and energy loss in this element is very low, i.e., less than 1 Joule. Thus, bidirectional thyristor 62 and bidirecional avalanche diode 63 can be realized with small chip area. Assuming breakdown voltage $V_{B1}$ of bidirectional avalanche diode 61 to be 35 V, the flow of the lightning surge waveform noted above through this element causes an energy loss of 1.75 J therein. The chip area, and hence the capacitance, of bidirectional avalanche diode 63 is large compared to the case of bidirectional thyristor 62 and bidirectional avalanche diode 63. However, since bidirectional avalanche diode 61 having the large capacitance is connected in series to the parallel connection of bidirectional avalanche diode 63 and bidirectional thyristor 62 each having small capacitance, the total capacitance of protector circuit 64 is small. The protector circuit thus can be used for high-speed, wide bandwidth communication as well. Further, since the lightning surge voltage is applied directly to bidirectional voltage limiting elements 61 and 63 and bidirectional thyristor 62 is turned on through the breakdown of elements 61 and 63, the lightning surge application can be quickly responded with the turning-on of bidirectional thyristor 62.

Where a plurality of signal lines are connected to equipment 11, protector circuits 64 and 65 may be connected between signal lines 12 and 13 and a grounding terminal, as shown in Fig. 13. Protector circuits 64 and 65 have the same construction. In this example, the gate terminals of bidirectional thyristors 62 of protector circuits 64 and 65 are connected together by line 48. Line 48 is connected to no other part to hold the gate terminals of bidirectional thyristors 62 and 66 open. In the case where a lightning surge is applied to either one of signal lines 12 and 13, it will be appreciated that the protector circuit of Fig. 13 can also protect equipment 11 in a similar manner explained with respect to the circuit shown in Fig. 11. In the case where a lightning surge is simultaneously applied to signal lines 12, 13, there would be no fear of applying an overvoltage to equipment 11 either between signal lines 12, 13 and ground or between signal lines 12 and 13. When a lightning surge is applied to signal line 12 and also to signal line 13 with a time lag behind the former, for example, to turn on bidirectional voltage limiting elements 61, 63, the on-current at that moment flows into gates of both bidirectional thyristors 62, 66 to turn them on simultaneously, thus protecting equipment 11. Alternatively the turning on of bidirectional voltage limiting elements 61, 63 causes to turn on bidirectional thyristor 62 and the gate-cathode voltage of bidirectional thyristor 62 caused by the on-current thereof is applied across the gate and cathode of bidirectional thyristor 66 to turn it on. Since the time interval between the turn-on of thyristors 62 and 66 is extremely short, the protector circuit shown in Fig. 13 can protect equipment 11 from lightning surge voltages on signal lines 12, 13 having a phase difference therebetween, that is, from transverse mode voltage.

Where a series connection of a bidirectional thyristor and a bidirectional voltage limiting element is connected between each of signal lines and ground and the gate terminals of the individual bidirectional thyristors are connected together as shown in Figs. 9, 10 and 13, the bidirectional thyristors are preferably provided on the ground side with respect to the bidirectional voltage limiting elements. Although the bidirectional voltage limiting elements may be provided on the ground side, in this case the mutually connected bidirectional thyristors may fail to be turned on simultaneously if the fluctuations of the breakdown voltages of the bidirectional voltage limiting elements are excessive.

In case of equipment 11 using a commercial power supply such as a facsimile apparatus, equipment 11 may be connected to commercial power lines (not shown) through connector 84, as shown in Fig. 14. In this case, a lightning surge is applied to equipment 11 via signal line 12 and also via power line. Since the signal line and power line are laid along different routes, lightning surge reaches equipment 11 with different waveforms and at different phases via the signal line and power line, respectively. That is, a transverse mode voltage is generated between the signal line and power line. Accordingly, power lines 85 and 86 connected to connector 84 of equipment 11 are grounded through respective bidirectional voltage limiting elements 87 and 88 and then through common bidirectional thyristor 89. The gate terminal of bidirectional thyristor 89 in the power supply side protector circuit and the gate terminal of bidirectional thyristor 33 in protector circuit 31 on the side of signal line 12 are connected together with line 91. It will be understood that with this arrangement no transverse mode voltage will be applied across equipment 11 in the events of a lightning surge applied to signal line and also that applied to power line. The connection point between bidirectional voltage limiting elements 87 and 88 is connected to a primary center tap of a transformer of equipment 11.

Similar connections may be used in the other protector circuits according to the invention so long as commercial power lines are connected to equipment 11, as shown by dashed lines in Fig. 13, for instance.

**Claims**

1. A protector circuit for protecting a communication equipment (11) connected to a plurality of signal lines (12, 13; 51, 52) from a surge voltage applied to a signal line, comprising a bidirectional voltage limiting element (32) of a breakdown voltage (VB) which is slightly higher than a battery feed voltage (VBf) on at least one of said signal lines, and a bidirectional thyristor (33) of a break-over voltage VB0 connected between each of said signal lines and ground, said individual bidirectional thyristors (33, 46) having respective gate terminals (48) connected together, said protector circuit protecting the communication equipment by a turning-on of the bidirectional voltage limiting element and the bidirectional thyristor,

characterized in that

a series connection of the bidirectional voltage limiting element (32, 45) and the bidirectional thyristor (33, 46) is connected between each signal line and ground,

said interconnected gate terminals are held open without being connected to any other part, and

the sum of the breakdown voltage (VB) of each bidirectional voltage limiting element (32, 45) and the break-over voltage (VB0) of each bidirectional thyristor (33, 46) is lower than a breakdown voltage (VR) of said equipment (11) and higher than a non-operation voltage (VA) thereof.

2. A protector circuit for protecting a communication equipment (11) connected to a plurality of signal lines (12, 13) from a surge voltage applied to a signal line, comprising a first bidirectional voltage limiting element (61) of a first breakdown voltage (VB1) which is slightly higher than a battery feed voltage (VBf) on at least one of said signal lines, and a bidirectional thyristor (62, 66) of a break-over voltage VB0, connected between each of said signal lines and ground said individual bidirectional thyristors (62, 66) having respective gate terminals (48) connected together, said protector circuit protecting the communication equipment by a turning on of the bidirectional voltage limiting element and the bidirectional thyristor,

characterized in that

a series connection of the first bidirectional voltage limiting element (61) and the bidirectional thyristor (62, 66) is connected between each signal line and ground,

a second bidirectional voltage limiting element (63) of a second breakdown voltage (VB2) is connected between anode and gate terminals of each bidirectional thyristor (62, 66), the interconnected gate terminals (48) of said bidirectional thyristors (62, 66) being connected to no other part,

the sum of said first and second breakdown voltages (VB1 and VB2) and the gate-cathode voltage (VGK) of each bidirectional thyristor (62, 66) is lower than a breakdown voltage (VR) of said equipment (11) and higher than a non-operation Voltage (VA) thereof, and

the break-over voltage VB0 of each bidirectional thyristor (62, 66) is higher than the second breakdown voltage (VB2).

3. The protector circuit according to claim 2, characterized in that said bidirectional thyristor (62, 66) is provided on the ground side with respect to said first bidirectional voltage limiting element (61).

4. The protector circuit according to claim 1 or 2, characterized in that commercial power lines (85, 86) connected to said equipment (11) are grounded through respective bidirectional voltage limiting elements (87, 88) and then through a common further thyristor (89), and the gate terminal of said further bidirectional thyristor (89) and the gate terminals of said bidirectional thyristors (62, 66) being connected together.

**Revendications**

1. Un circuit de protection pour protéger un équipement de communication (11) connecté à une pluralité de lignes de signal (12, 13; 51, 52) d'une surtension appliquée à une ligne de signal, comprenant un élément limiteur de tension bi-directionnel (32) ayant une tension de décharge (VB) qui est légèrement plus élevée qu'une tension d'alimentation de batterie (VBf) sur au moins l'une desdites lignes de signal, et un thyristor bi-directionnel (33) ayant une tension de retournement VBO, connectés entre chacune desdites lignes de signal et la terre, lesdits thyristors bi-directionnels individuels (33, 46) ayant des bornes de grille respectives (48) reliées ensemble, ledit circuit de protection protégeant l'équipement

9

de communication par la mise à l'état conducteur de l'élément limiteur de tension bi-directionnel et du thyristor bi-directionnel,

caractérisé en ce que

un montage en série de l'élément limiteur de tension bi-directionnel (32, 45) et du thyristor bi-directionnel (33, 46) est connecté entre chacune des lignes de signal et la terre,

lesdites bornes de grille interconnectées sont tenues ouvertes sans être connectées à aucun autre élément, et

la somme de la tension de décharge (VB) de chacun des éléments limiteurs de tension bi-directionnels (32, 45) et de la tension de retournement (VBO) de chacun des thyristors bi-directionnels (33, 46) est inférieure à une tension de mise hors service (VR) dudit équipement (11) et plus élevée qu'une tension de repos (VA) de celui-ci.

2. Un circuit de protection pour protéger un équipement de communication (11) connecté à une pluralité de lignes de signal (12, 13) d'une surtension appliquée à une ligne de signal, comprenant un élément limiteur de tension bi-directionnel (61) ayant une première tension de décharge (VB1) qui est légèrement plus élevée qu'une tension d'alimentation de batterie (VBf) sur au moins l'une desdites lignes de signal, et un thyristor bi-directionnel (62, 66) ayant une tension de retournement VBO, connectés entre chacune desdites lignes de signal et la terre, lesdits thyristors bi-directionnels individuels (62, 66) ayant des bornes de grille respectives (48) reliées ensemble, ledit circuit de protection protégeant l'équipement de communication par la mise à l'état conducteur de l'élément limiteur de tension bi-directionnel et du thyristor bi-directionnel,

caractérisé en ce que

un montage en série du premier élément limiteur de tension bi-directionnel (61) et du thyristor bi-directionnel (62, 66) est connecté entre chacune des lignes de signal et la terre,

un second élément limiteur de tension bi-directionnel (63) ayant une seconde tension de décharge (VB2) est connecté entre les bornes d'anode et de grille de chacun des thyristors bi-directionnels (62, 66), les bornes des grilles interconnectées (48) desdits thyristors bi-directionnels (62, 66) n'étant connectées à aucun autre élément,

la somme desdites première et seconde tensions de décharge (VB1 et VB2) et de la tension grille-cathode (VGK) de chacun des thyristors bi-directionnels (62, 66) est inférieure à une tension de mise hors service (VR) dudit équipement (11) et plus élevée à qu'une tension de repos (VA) de celui-ci, et

la tension de retournement VBO de chacun des thyristors bi-directionnels (62, 66) est plus élevée que la seconde tension de décharge (VB2).

3. Le circuit de protection selon la revendication 2, caractérisé en ce que ledit thyristor bi-directionnel (62, 66) est disposé du côté de la terre par rapport audit premier élément limiteur de tension bi-directionnel (61).

4. Le circuit de protection selon la revendication 1 ou 2, caractérisé en ce que des lignes d'alimentation secteur (85, 86) connectées audit élément (11) sont mises à la terre par l'intermédiaire d'éléments limiteurs de tension bi-directionnels respectifs (87, 88) et ensuite par l'intermédiaire d'un thyristor supplémentaire commun (89), et la borne de grille dudit thyristor bi-directionnel supplémentaire (89) et les bornes de grille desdits thyristors bi-directionnels (62, 66) étant reliées ensemble.

## Patentansprüche

1. Schutzschaltung zum Schutz einer Kommunikationseinrichtung (11), die an eine Vielzahl von Signalleitungen (12, 13; 51, 52) angeschlossen ist, vor einer an einer Signalleitung auftretenden Überspannung, umfassend ein bidirektionales Spannungsbegrenzungselement (32) einer Durchbruchsspannung (VB), die etwas höher als eine Batteriespeisespannung (VBf) an wenigstens einer der Signalleitungen ist, und einen bidirektionalen Thyristor (33) einer Kippspannung (VB0) zwischen jeder der Signalleitungen und Erde, wobei die einzelnen bidirektionalen Thyristoren (33, 46) jeweilige Gateanschlüsse (48) haben, die miteinander verbunden sind, und wobei die Schutzschaltung die Kommunikationseinrichtung durch ein Einschalten des bidirektionalen Spannungsbegrenzungselements und des bidirektionalen Thyristors schützt,

dadurch **gekennzeichnet,**

daß eine Reihenschaltung aus dem bidirektionalen Spannungsbegrenzungselement (32, 45) und dem bidirektionalen Thyristor (33, 46) zwischen jede Signalleitung und Erde geschaltet ist,

daß die untereinander verbundenen Gateanschlüsse offengehalten sind, ohne mit irgend einem anderen Teil verbunden zu sein, und

daß die Summe der Durchbruchsspannung (VB) jedes bidirektionalen Spannungsbegrenzungselements (32, 45) und der Kippspannung (VB0) jedes bidirektionalen Thyristors (33, 46) kleiner ist als die Durchbruchsspannung (VR) der Einrichtung (11) und größer ist als deren Nichtbetiebs-Spannung (VA).

2. Schutzschaltung zum Schutz einer Kommunikationseinrichtung (11), die an eine Vielzahl von Signalleitungen (12, 13) angeschlossen ist, vor einer an einer Signalleitung auftretenden Überspannung, umfassend ein erstes bidirektionales Spannungsbegrenzungselement (61) einer ersten Durchbruchsspannung (VB1) die etwas höher ist als eine Batteriespeisespannung (VBf) an wenigstens einer der Signalleitungen, und einen bidirektionalen Thyristor (62, 66) einer Kippspannung (VB0) zwischen jeder der Signalleitungen und Erde, wobei die einzelnen bidirektionalen Thyristoren (62, 66) jeweilige Gateanschlüsse (48) aufweisen, die miteinander verbunden sind, und wobei die Schutzschaltung die Kommunikationseinrichtung durch ein Einschalten des bidirektionalen Spannungsbegrenzungselements und des bidirektionalen Thyristors schützt,

dadurch **gekennzeichnet**,

daß eine Reihenschaltung des ersten bidirektionalen Spannungsbegrenzungselements (61) und des bidirektionalen Thyristors (62, 66) zwischen jede Signalleitung und Erde geschaltet ist,

daß ein zweites bidirektionales Spannungsbegrenzungselement (63) mit einer zweiten Durchbruchsspannung (VB2) zwischen den Anoden- und den Gateanschluß jedes bidirektionalen Thyristors (62, 66) geschaltet ist und die untereinander verbundenen Gateanschlüsse (48) der bidirektionalen Thyristoren (62, 66) mit keinem weiteren Teil verbunden sind,

daß die Summe der ersten und der zweiten Durchbruchsspannung (VB1 und VB2) und der Gate-Kathoden-Spannung (VGK) jedes bidirektionalen Thyristors (62, 66) kleiner als eine Durchbruchsspannung (VR) der Einrichtung (11) und höher als deren Nichtbetriebs-Spannung (VA) ist, und

daß die Kippspannung (VB0) jedes bidirektionalen Thyristors (62, 66) höher als die zweite Durchbruchsspannung (VB2) ist.

3. Schutzschaltung nach Anspruch 2, dadurch **gekennzeichnet,** daß der bidirektionale Thyristor (62, 66) bezogen auf das erste bidirektionale Spannungsbegrenzungselement (61) erdseitig angeordnet ist.

4. Schutzschaltung nach Anspruch 1 oder 2, dadurch **gekennzeichnet**, daß mit der Einrichtung (11) verbundene Netzleitungen (85, 86) über jeweilige bidirektionale Spannungsbegrenzungselemente (87, 88) und dann durch einen gemeinsamen weiteren Thyristor (89) mit Erde verbunden sind, und der Gateanschluß des weiteren bidirektionalen Thyristors (89) und die Gateanschlüsse der bidirektionale Thyristoren (62, 66) miteinander verbunden sind.

## FIG. 1 PRIOR ART

## FIG. 2 PRIOR ART

## FIG. 3 PRIOR ART

# FIG. 4
## PRIOR ART

# FIG. 5

# FIG. 6

FIG. 7A

FIG. 7B

# FIG. 8

# FIG. 9

EP 0 186 873 B1

*FIG. 10*

*FIG. 11*

## FIG. 12

## FIG. 13

# FIG. 14